(19) Europäisches Patentamt
European Patent Office
Office européen des brevets

(11) **EP 2 873 330 B1**

(12) **EUROPEAN PATENT SPECIFICATION**

(45) Date of publication and mention
of the grant of the patent:
**15.03.2017 Bulletin 2017/11**

(21) Application number: **14198528.3**

(22) Date of filing: **16.05.2007**

(51) Int Cl.:
*A23L 3/00* (2006.01)     *A23G 1/30* (2006.01)
*A23G 1/36* (2006.01)     *A23G 1/40* (2006.01)
*A23G 1/46* (2006.01)     *A23G 1/54* (2006.01)

(54) **Edible composition as moisture barrier and moisture resistant structure**

Essbare Zusammensetzung als Feuchtigkeitssperre und feuchtigkeitsbeständige Struktur

Composition comestible en tant que pare-vapeur et structure résistante à l'humidité

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(43) Date of publication of application:
**20.05.2015 Bulletin 2015/21**

(62) Document number(s) of the earlier application(s) in accordance with Art. 76 EPC:
**07009834.8 / 1 992 232**

(73) Proprietor: **Kraft Foods R & D, Inc.**
**Deerfield, IL 60015 (US)**

(72) Inventors:
• **Pfeifer, Jochen K.**
**82377 Penzberg (DE)**
• **Kortum, Olaf C.**
**85579 Neubiberg (DE)**
• **Schulz, Michael**
**81737 München (DE)**
• **Hässelbarth, Alexander**
**81739 München (DE)**
• **Hennen, Jozef C.**
**81737 München (DE)**
• **Degenhard, Andreas**
**37603 Holzminden (DE)**

(74) Representative: **Wilson Gunn**
**Charles House**
**148/9 Great Charles Street**
**Birmingham B3 3HT (GB)**

(56) References cited:
**EP-A1- 0 023 151        EP-A1- 0 980 650**
**WO-A-00/16636         WO-A-00/70959**
**WO-A-96/05735         WO-A-97/40700**
**WO-A1-03/068001      WO-A2-98/42214**
**GB-A- 2 131 669        US-A1- 2007 087 085**

## Description

## Technical Field of the Invention

The present invention relates to an edible composition suitable to be used, for instance, as barrier layer in significant amounts in food products in order to prevent a transfer of moisture from the food product to the environment, from the environment to the food product, or within the food product between different components of said food product.

## Background of the Invention

Edible barrier compositions are used in the form of barrier layers and the like in order to prevent moisture transfer between finished food products and the environment and for preventing moisture transport among components of heterogeneously structured food products. Since loss or gain of moisture can result in detrimental changes in food quality, barrier compositions can maintain product quality and prolong shelf-life of food products.

For these reasons, there is a considerable interest in edible compositions suitable for such barrier layers.

In the art, water activity (aw) is used as a value for measuring the moisture content of a food component relevant with respect to transfer of moisture. It represents the relative availability of water in a food component. It is defined as the ratio of the water vapor pressure of the respective food component to the vapor pressure of pure water at the same temperature. Therefore, pure distilled water has a water activity of exactly 1. Moisture tends to migrate from components having a high aw to components having a low aw.

Among the barrier compositions used in food industry, lipid-containing compositions play an important role due to their inherent hydrophobicity. It is believed that the crystallized fat portion (also referred to as the solid fat content SFC) is the most functional component in a fat based moisture barrier since the densely packed crystal structure and its low mobility greatly hinder diffusion of water molecules. It has, therefore, been attempted to develop barriers using fat compositions with a high portion of crystallized fat. Barrier compositions having high total lipid content and high crystallized fat portion are prone to cracking and, therefore, they have to be applied in relatively thick layers. However, this is undesirable because the accomplished barrier properties may be equiponderated by unfavourable properties imparted to the food product, such as an unfavourable taste, a waxy mouthfeel, high energy content and sometimes an elevated content of trans-configured fatty acid components. The latter two properties are particularly disadvantageous since they are incommensurate with nutritional requirements to be met by modern food products.

Compositions made of a continuous fat component and a dispersed non-fat component represent a compromise between moisture barrier functionality and advantageous organoleptic properties due to their reduced lipid content. Moreover it is believed that the non-fat portion enhances the mechanical strength of the composition and thus reduces the risk of cracking. Barrier compositions comprising a continuous fat phase and dispersed non-fat components are referred to as heterogeneous barriers. For the non-fat components it is again particularly useful to have a high portion of crystalline structures since the crystal structure prevents diffusion of water molecules. To maintain moisture barrier functionality it is preferable that said non-fat crystals have a low solubility in water since they would otherwise be dissolved over time. The resulting interest in such compositions is reflected by numerous prior art publications.

WO 97/15198 (Unilever) discloses a fat-based moisture barrier comprising 40 to 95 % by weight of a fat and 5 to 60 % by weight of lactose. Further inclusions such as cocoa powder or milk solids constitute less than 10% and are preferably not present at all. Such compositions have the drawback of a poor sensorial profile (e.g. low sweetness) and nutrition profile (e.g. high fat). It has been claimed that these compositions remain intact when brought into contact with components having an aw of 0.9.

US 2004/0241287 A1 (Friesland Brands) discloses a moisture barrier in food composed of a continuous fat phase, i.e. consisting to at least 60 to 99 % of fat, and 1 to 15 % of water- and fat-insoluble inclusions such as silicon dioxide, silicates, or cellulose. Such ingredients are undesirable in food products as they negatively affect organoleptic properties.

US 5,741,505 discloses moisture barriers consisting of a continous inorganic material, such as $SiO_2$, CaO, ZnO, $TiO_2$ or MnO. The coating is applied by sputtering or chemical plasma deposition.

US 6,733,805 (LuFrance) and US 6,790,466 (Gervais Danone) disclose a solid mass of chocolate or a chocolate-like product comprising by weight 43 to 68 % of fat, less than 25 % of dry and defatted cocoa, less than 17 % of skimmed milk powder, and more than 13 % of sugar. The fat is preferably cocoa butter, the sugar comprises sucrose, lactose, fructose and mixtures therof.

Ravichandran et al. (Confectionery Production, Nov. 1997, 33-34) report that conventional dark and milk chocolate compositions are stable to adjacent aqueous systems up to a water activity corresponding to 0.75. At higher aw, their moisture uptake becomes significant, i.e. exceeding 1.5% and 2.8%, respectively, which results in unacceptable softening.

WO00/16636 discloses a composition comprising *inter alia* vegetable fat, a mixture comprising sugar, dry fruits or dry milk derivative and cocoa powder.

WO 00/70959 discloses a food composition comprising 43-68% fat, defatted and dry cocoa (less than 25%), less than 17% skimmed milk powder and greater than 13% sugar.

WO97/40700 discloses a low temperature confectionery product containing 15-25% fat, 3.5% - 15% milk fat, 0-8% defatted cocoa solids, 5-30% sugar and 9-20% milk solids.

US2007/087085 discloses a food product containing 35-90% fat, a protein which may be a dairy product in an amount of between 10-65%, and up to 0.3% of PGPR emulsifier. Additionally, the compositions may optionally contain sugar and cocoa powder and defatted dry milk.

EP0023151 discloses a food product containing 30%-70% fat, sugar, cocoa powder and milk solids.

WO96/05735 discloses a reduced-fat chocolate product containing 25-35% fat, 0-20% non-fat milk powder, 5-20% cocoa powder, 35-55% sugar, and an emulsifier which may be a lactylated or acetylated glyceride.

GB2131669A discloses a food composition containing 17-55% fat, 35-60% sugar, 0-30% dry cocoa, 0-20% milk products and glyceride emulsifiers.

WO03/068001 discloses a moisture barrier and a sweet topping for frozen dessert products, which may comprise cotton seed oil (39%), coconut oil (21%), ground sugar (24%), cocoa solids (6%) and dry milk solids (10%), along with a quantity of cocoa powder.

WO98/42214 discloses an edible composite film or coating for use as a moisture barrier in food stuff which may comprise casein (5.25%) and Satro fat (29.75%).

EP0908650A1 discloses a composition comprising 40 parts cocoa butter, 18 parts powdered whole milk and 9 parts cocoa mass.

The object of the present invention is to provide an edible composition suitable as moisture barrier layer between food components having a high water activity and food components having a lower water activity, wherein the composition does not deteriorate the overall organoleptic properties of the food product. This implies that the composition has a high moisture resistance. Furthermore, the composition should have a pleasant taste, no waxy mouthfeel, low fat content, low energy content, and does not contain trans-configured fatty acid components.

More particularly, the object of the present invention is to provide an edible composition suitable as moisture barrier layers between food components having a water activity of 0.80 or more and food components having a water activity lower than 0.80.

It is a further object of the present invention to provide a food product comprising said edible composition.

Summary of the invention

These objects are accomplished by an edible composition comprising, based on the total weight of the composition,

a) 5 to 50 % by weight of a dairy ingredient having a low mineral content in terms of an ash content of 5.5 % by weight or less, preferably 3.5 % by weight or less, more preferably 2.8 % by weight or less, most preferred 1.8 % by weight or less,

b) 0 to 25 % by weight of a cocoa component having a low mineral content in terms of an ash content of 4.5 % by weight or less, preferably 3.5 % by weight or less, more preferably 2.5 % by weight or less,

c) 0 to 2 % by weight of an emulsifier selected from the list consisting of acetic acid esters of mono and diglycerides of fatty acids, lactic acid esters of mono and diglycerides of fatty acids, citric acid esters of mono and diglycerides of fatty acids, and polyglycerol polyricinoleate,

d) a fatty component,

e) 0 to 60 % by weight of at least one sugar and/or polyol of which the saturated solution has a water activity of at least 0.84, preferably at least 0.89, more preferably 0.94; wherein the total fat content of the composition is from 25 to 60 % by weight.

Furthermore, a food product comprising the aforementioned composition is provided. In such a food product, the composition can be present in the form of a structure such as a layer which separates at least two other components by being arranged between and in contact with said at least two components.

Detailed Description of the Invention

The present inventors have found that the compositions according to the present invention are distinguished from conventional compositions and pure fat barriers, by having simultaneously the following characteristics:

- pleasant taste, i.e. sweet or less sweet, in accordance with the respective application (ranging from sweet to savoury), without waxy mouthfeel,
- good nutritional profile due to a relatively low fat content and a high protein content,
- low water permeability, i.e. good inhibition of moisture transfer and
- a high moisture resistance. This feature can be quantified by means of a low moisture uptake. This implies that the sensory profile is maintained even when the composition is in direct contact with aqueous components in the food product.

Moisture migration through a mechanically intact barrier can occur whenever there is a water activity gradient between the adjacent phases and involves several stages. In the first stage the water molecules dissolve into the barrier surface at the interface with the higher water activity component. In a second stage there is diffusion of the water molecules through the barrier and in a third stage the water molecules are released into the lower water activity phase.

'Barrier functionality' as used in this document is the ability of a material to greatly reduce moisture migration when placed as a layer between a lower water activity phase and a higher water activity phase.

When a lower water activity composition such as for example chocolate is brought into direct contact with a higher water activity composition the water activity gradient leads to moisture migration into the lower water activity composition. The increased water content often leads to undesirable changes in the lower water activity composition such as for example loss in brittleness.

'Moisture resistance' as used in this document is the ability of a low water activity material to maintain over shelf-life its properties - particularly its organoleptic properties - when in direct contact with a high water activity composition. Moisture resistance can result from either greatly retarded moisture up-take or a structure which maintains its properties despite significant moisture uptake. (Materials with good moisture resistance tend to also display barrier functionality but this is not a must).

It has been found by the inventors that results of a simple moisture uptake test correlate very well with 'barrier functionality' and 'moisture resistance' as explained above. To perform the moisture uptake test the composition is moulded in rectangular tablets (38mm x 23mm x 6mm) and exposed to atmospheres with controlled relative humidity and temperature. The weight change of multiple replicates is recorded over time. The result is expressed as the average weight increase of replicates based on the original weight of the sample. For example, conventional chocolate compositions which are considered not to be functional barriers within the sense of this document have a moisture uptake in excess of 6% when stored at 95% relative humidity / 10°C for 28 days. Compositions with sufficient moisture resistance and barrier functionality within the sense of this invention have a moisture up-take of 3.5% or less when stored at 95% relative humidity / 10°C for 28 days. Preferred compositions have a moisture up-take of 3.0% or less when stored at 95% relative humidity / 10C for 28 days. More preferred compositions have a moisture up-take of 1.5% or less when stored at 95% relative humidity / 10°C for 28 days. Most preferred compositions have a moisture up-take of 0.8% or less when stored at 95% relative humidity / 10°C for 28 days.

As a further advantage, it is also possible to customize the taste profile or appearance of the composition in order to render it compatible with sweet or savoury applications by adjusting the content of sugar and/or polyol and/or by adding flavour additives and/or by adding colorants. For this purpose, any suitable compound can be added to the composition as long as the moisture barrier and moisture resistance properties are not affected in a manner contravening the object of the invention. Thus, it is conceivable to compound the composition with additives such as beetroot red (E162), indigotine blue (E132), or quinoline yellow (E104) or the like as colorants in order to achieve a desired appearance or with additives such as salmon flavour, smoked flavour, blue cheese flavour or the like in order to achieve a desired taste.

The compositions according to the present invention can be chocolate compositions, but the term is by no means limited to this meaning. This means that the composition may taste like chocolate and have the same appearance, but it does not comply with the requirements stipulated in legal directives with respect to the term 'chocolate'. As such, the composition of the present invention may be formulated as dark chocolate, milk chocolate or white chocolate in terms of organoleptic characteristics.

According to common practice, a chocolate composition comprising about 19 % by weight of dry and defatted cocoa is referred to as dark chocolate; a chocolate composition comprising about 6 % of dry and defatted cocoa is referred to as milk chocolate; and a chocolate composition being essentially free of dry and defatted cocoa is referred to as white chocolate.

That is to say, to the extent the composition of the present invention can be considered a chocolate composition or chocolate-like composition, it can be used as any type of conventional chocolate, including white chocolate, milk chocolate or dark chocolate. For instance, a typical white chocolate comprises 40 to 55 % by weight of sugar, 20 to 40 % by weight of whole milk powder and 20 to 30 % by weight of cocoa butter. A typical milk chocolate comprises 40 to 55 % by weight of sugar, 20 to 30 % by weight of whole milk powder, 10 to 25 % by weight of cocoa butter and 6 to 20 % by weight of cocoa mass. A typical dark chocolate comprises 30 to 60 % by weight of sugar, 0 to 20 % by weight of cocoa butter, 26 to 50 % by weight of cocoa mass, and 0 to 10% of cocoa powder.

### a) Dairy Ingredient

The dairy ingredient having a low mineral content is any ingredient derived from milk or whey with a moisture content of no more than 10% by weight and a fat content of no more than 50% by weight that may have been subjected to standard demineralization techniques, such as for example nanofiltration, ion-change, electrodialysis or diafiltration.

Within the sense of this invention any material derived from milk with a fat content of more than 50% by weight would be considered a fatty component and not dairy ingredient.

Dairy ingredients with a fat content of no more than 10% are preferred over those with a higher fat content. Suitable dairy ingredients within the sense of this invention can be derived through demineralization and drying of ingredients taken from (but not limited to) the group consisting of whole milk, skim milk, whey, whey protein concentrate, milk protein concentrate, or whey permeate.

Table 1 below displays typical values of ash content and the profile of monovalent ions in skim milk powder, whey protein concentrate (35% protein), whey powder, and whey permeate powder which are conventional non-demineralised dairy ingredients.

In order to be suitable as a dairy ingredient having a low mineral content within the sense of the present invention, the dairy product has an ash content of less than 5.5 % by weight, preferably less than 3.5 % by weight, more preferably less than 2.8 % by weight, most preferably less than 1.8 % by weight.

Typical composition of non-demineralized dairy ingredients are shown in the following table:

Table 1: Typical data of the composition of conventional dairy ingredients

| | moisture [g/100g] | fat [g/100g] | protein [g/100g] | ash [g/100g] | Sodium [mg/kg] | Potassium [mg/kg] | Chloride [mg/kg] | monovalent ions [mg/kg] |
|---|---|---|---|---|---|---|---|---|
| Whole milk powder #) | 3.1 | 29.3 | 25.8 | 5.7 | 3720 | 12200 | 7900 | 23820 |
| Skim milk powder #) | 4.0 | 0.7 | 36.9 | 7.9 | 5590 | 15800 | 10550 | 31940 |
| Whey protein concentrate powder with 35% protein | 3.9 | 2.8 | 34.1 | 6.7 | 4500 | 17000 | 10700 | 32200 |
| Whey powder+) | 4.6 | 1.0 | 11.7 | 7.8 | 5800 | 23000 | 16000 | 44800 |
| Whey permeate powder *) | 3.0 | 1.0 | 3.5 | 8.0 | 7500 | 26000 | 17500 | 51000 |
| Milk permeate powder *) | 4.0 | 1.0 | 4.0 | 7.0 | 6500 | 27000 | 17000 | 50500 |
| #) Souci, S.; Fachmann, W.; Kraut, H., Die Zusammensetzung der Lebensmittel - Naehrwert Tabellen, Wiss. Verlagsges. Stuttgart, 1986; *) supplier's product specification (Milei / Molkolac-Milkolac) +) average values of analyses of samples from various suppliers carried out by the applicant | | | | | | | | |

Demineralized dairy ingredients with a protein concentration of greater than 25% in dry substance are of particular interest since they allow incorporation of significant amounts of milk protein which is favourable for the nutrition profile and can provide a desired milky organoleptic impression. The ash content of the dairy product can be taken as a value to measure the mineral content. The ash content is the inorganic residue remaining after ashing the product in a muffle oven at 550°C for at least 1 hour. The ash content is expressed as a weight percentage of the inorganic residue relative to the initial sample weight before ashing. The content of monovalent ions can be taken to further characterize the mineral composition. For the present invention, the content of monovalent ions is the sum of the content of sodium, potassium, and chloride ions. One way to prepare a food sample for determination of the content of Na- and K-ions is to digest the sample by mixing it with an acid such as nitric acid followed by heating the mixture in a closed vessel in a microwave oven.

The content of Na- and K-ions can then be analyzed in the resulting solution by a method such as inductively coupled plasma optical emission spectrosocopy known in the art as ICP-OES using, e.g the OPTIMA 4300 instrument from Perkin & Elmer. To determine the content of Cl-ions in a food sample it can be dissolved in water, acidified with 0.25 mol/l nitric acid and titrated with 0.1 mol/l silver nitrate solution using a redox electrode, e.g. Mettler Toledo DM141-SC. The endpoint of titration is usually read from the inflection point of the titration curve.

It is preferred that the dairy ingredient has a content of monovalent ions lower than in conventional natural dairy products. The content of monovalent ions is less than 22000 mg/kg, preferably less than 15000 mg/kg, more preferably less than 9000 mg/kg, most preferably less than 4000 mg/kg. Table 2 below shows examples of dairy ingredients suitable within the present invention.

Table 2: Composition of demineralized dairy ingredients:

| | moisture [g/100g] | fat [g/100g] | protein [g/100g] | ash [g/100g] | Sodium [mg/kg] | Potassium [mg/kg] | Chloride [mg/kg] | monovalent ions [mg/kg] |
|---|---|---|---|---|---|---|---|---|
| Milacteal 60 (Milei) | 5 | 5 | 60 | 4 | 3200 | 10500 | 3200 | 16900 |
| Sicalac 40 (Euroserum) | max. 4 | max. 1 | max. 11 | max. 5.2 | | | | |
| Hiprotal 45 (Frieslands Foods) | max. 4 | max. 3.8 | 43-47 | max. 3.5 | | | | |
| Sicalac 50SC (Euroserum | max. 4 | max. 1 | min. 11 | max. 3 | 4000 | 10000 | 2000 | 16000 |
| Milacteal 70 S (Milei) | 5 | 6 | 70 | 3 | 2850 | 9500 | 2200 | 14550 |
| Chocodem (Euroserum) | max. 3 | 1.5 - 2.5 | 15 - 17 | max. 3 | 1600 #) | 5500 #) | 2350 #) | 8450 #) |
| Isolac (Milei) | 5 | 1 | 90 | 2 | 6500 | 100 | 1500 | 8100 |
| Sicalac 70 (Euroserum) | max. 3 | max. 1 | min. 11 | max. 2.7 | | | | |
| Sicalac 90 (Euroserum) | max. 3 | max. 1 | max. 11 | max. 1 | | | | |
| Deminal 90 (Frieslands Foods) | max. 3 | min. 1 | max. 12 | max. 1 | 680 #) | 2150 #) | 300 #) | 3050 #) |
| Data taken from suppliers' specification except where indicated by #) analysis by the applicant | | | | | | | | |

Compositions according to the present invention contain between 5% and 50% of a suitable dairy ingredient. Particularly advantageous are compositions containing 10% to 50% and even more advantageous are compositions containing 25% to 50% of suitable dairy ingredients.

**b) Cocoa Component**

The term 'cocoa component' as used in the present application text refers to the non-fat portion of any component obtainable from cocoa, however, the process to manufacture a cocoa component suitable for the present invention can also be applied to materials which encompass substantial amounts of cocoa butter such as cocoa liquor, cocoa nibs, or cocoa beans. The fat portion of these ingredients would be considered a fatty component.

In order to manufacture a cocoa component suitable for the composition according to the present invention reference is made to US 6,488,975 and EP 1 346 640. Other processes are conceivable as well. For instance, a cocoa component in accordance with the invention can be obtained by modifying any commercially available natural cocoa source. Suitable cocoa starting materials include alkalized or non alkalized cocoa powders, cocoa liquor, cocoa nibs or cocoa husks. In a first step, the cocoa starting material is suspended in water to extract a substantial portion of the water soluble constituents, including pigments, flavor compounds, ash, minerals, sugars. By water is meant tap water, distilled water, deionized water or any aqueous solution not adversely affecting the ash content of the extracted cocoa starting material. For example, food acceptable acids and bases as well as polar solvents like ethanol can be added to modify the pH or flavor as desired. The amount of water used for extraction is chosen such to create a suspension suitable for extracting a substantial amount of the water soluble constituents. The temperature of the water can vary over a wide range of suitable conditions. Typically the extraction temperatures occurs between 0°C and 100°C. In some embodiments, the temperature is chosen such to suspend a high fat cocoa starting material at melting temperature.

Preferably, at least 1 part of water, more preferably from about 4 to about 20 parts of water are added to one part of cocoa starting material. The mixture is then agitated under high shear until a substantial portion of the water soluble constituents are extracted.

In some embodiments, the cocoa starting material is multiple extracted batchwise, in other embodiments the extraction can be continuous.

The supernatant can be separated using any suitable technique like microfiltration, vacuum filtration, centrifuging and the like. Furthermore, the dissolved constituents can be removed from the supernatant using any suitable technique like nanofiltration, ion exchange, electrodialysis and the like.

The cocoa component which can be considered as the retentate of the separation described above after removing the water is suitable to the present invention. The cocoa component is characterized by a reduced ash content of 4.5% by weight or less, preferably 3.5% by weight or less, more preferably 2.5% by weight or less and, preferably, a significant reduction of potassium salts versus the cocoa starting material of at least 35%, preferably at least 50%, more preferably at least 75%.

The ash content and potassium content are determined by essentially the same method as described in relation to the dairy ingredient, except that a temperature of 600°C is applied in ash determination of a cocoa component.

Compositions according to the present invention may contain between 0% and 25% of non-fat cocoa component. The amount used depends on desired organoleptic characteristics of the composition: A composition with 'white chocolate taste' would not contain any non-fat cocoa component, a composition with 'milk chocolate taste' would typically contain 3% to 10% of non-fat cocoa component and a composition with 'dark chocolate taste' may contain up to 30% of non-fat cocoa component.

**c) Emulsifier**

Fat based moisture barriers are generally applied in a at least partially melted / liquid form to other components of a food product and develop their barrier properties through fat crystallization in a subsequent cooling step. When being applied, good flowability of the liquid barrier material is desirable so that it will conform to irregular shapes and can conveniently be applied in thin layers. 'Apparent viscosity' is one way to characterize the flow behavior of liquids such as melted fat based barrier compositions, melted chocolate or compound materials. 'Apparent viscosity' is the quotient of shear stress over a shear rate as it can be measured in a rotational type viscometer using a concentric cylinder probe, e.g Haake VT550 and SV1. It is known in the art that the apparent viscosity of suspensions such as melted chocolate or fat based barrier compositions depends on both temperature and shear rate applied. Therefore, temperature and shear rate should be indicated with any reported value of apparent viscosity. Throughout this document viscosity numbers refer to 'apparent viscosity'.

For heterogeneous barriers particularly those with a fat content of less than 45% by weight, however, the flow behaviour may be impaired by friction between the dispersed non-fat particles.

It is therefore useful to optionally incorporate emulsifiers to the composition to achieve the desired flow behaviour while maintaining a relatively low fat content.

The emulsifier may be non-ionic or ionic. Ionic emulsifiers include cationic, anionic and amphoteric emulsifiers. Amphoteric emulsifiers are characterized by a charge dependent on environmental conditions. Examples of non-ionic emulsifiers are mono- and diglycerides of fatty acids (E471), acetic esters of mono- and diglycerides of fatty acids (E472a), lactic esters of mono- and diglycerides of fatty acids (E472b), citric esters of mono- and diglycerides of fatty acids (E472c), and polyglycerol polyricinoleate (PGPR, E476). Examples of anionic emulsifiers used in food products are sodium stearoyl lactate, glyceryl stearate citrate, and calcium stearoyl-2 lactate. Examples for amphoteric emulsifiers are lecithin (E322) or ammonium phosphatide (E442). A non-ionic emulsifier is preferred over an ionic emulsifier. A preferred emulsifier is selected from citric acid esters, which may be combined with PGPR.

Compositions according to the present invention contain between 0 % and 2 % by weight of a suitable emulsifier. Particularly advantageous are compositions containing 0.3 % to 1.2 % by weight and even more advantageous are compositions containing 0 % to 0.8 % by weight of a suitable emulsifiers.

### d) Fatty Component

The fatty component may be selected from cocoa butter and milk fat in the form of butter or anhydrous milk fat or blends thereof. The cocoa butter and milk fat may be partially or fully replaced by vegetable fats particularly those known as CBE (cocoa butter equivalent), CBS (cocoa butter substitute), CBR (cocoa butter replacer), or any other food grade fat.

Within the present invention the fat portion of the composition, which comprises the fatty components and the amount of fat which may be contained in the dairy component, in the cocoa component, or any other optional ingredient, has a solid fat content (SFC) of at least 60% at the intended storage temperature of the food product. The solid fat content is a measure frequently used to characterize the portion of fat in a sample which is solid or crystallized at a specific temperature. One way to measure the SFC is based on a difference in molecular mobility between a solid and a liquid phase and is analyzed by a method referred to as p-NMR (pulsed nuclear magnetic resonance) using, e.g. the Minispec instrument from Bruker and the procedure described in ISO 8292 or IUPAC 2.150. Table 3 below shows the SFC of several fatty components. It becomes apparent from the table that for example cocoa butter (CB) or the cocoa butter substitute DP3292 would be suitable fatty components at all listed temperatures. It is also apparent that pure anhydrous milk fat (AMF) would not be suitable at any of the listed temperatures, however, a blend of cocoa butter and milk fat may be suitable depending on blending ratio and storage temperature of the inventive composition: a 90:10 blend of CB and AMF would be suitable if the storage temperature does not exceed 20°C, a 80:20 blend of CB and AMF would be suitable for storage temperatures not exceeding 16°C, and a 70:30 blend of CB and AMF would require storage temperature of 10°C or less. The CBE (DP2742) and the CBR (Couva 500R) would definitely be suitable at storage temperature of 20°C or less while their suitability at 25°C is borderline.

Table 3: Fatty components

| Ingredient | SFC at 25°C [%] | SFC at 20°C [%] | SFC at 16°C [%] | SFC at 10°C [%] |
|---|---|---|---|---|
| cocoa butter (CB) #) | 77 | 80 | 82 | 86 |
| anhydrous milk fat (AMF) #) | 14 | 20 | 30 | 42 |
| CB:AMF 90:10 #) | 59 | 67 | 71 | 78 |
| CB:AMF 80:20 #) | 42 | 49 | 64 | 77 |
| CB:AMF 70:30 #) | 28 | 37 | 49 | 69 |
| Couva 500 R (CBR) Loders Croklaan | 58 - 63 | 78 - 82 | | 86 #) |
| Couva DP 3292 (CBS) Loders Croklaan | 62 - 73 | 80 - 92 | | |
| Couva DP2742 (CBE) Loders Croklaan | 55 - 68 | 65 - 80 | 87 #) | 91 #) |
| Data from supplier's specification unless indicated : #) = analysis by the applicant | | | | |

Compositions according to the present invention contain between 25% and 60% of total fat based on the total weight of the entire composition. Total fat is the sum of fat derived from the fatty component and fat derived from other ingredients namely the cocoa or dairy component. As aforementioned it is often desired to reduce the calorie content of food products. Depending on the fat content and on the selected sugar/polyol, the inventive compositions have a calorie content in the range of approx. 240 kcal/100g to approx. 700 kcal/100g as compared to 900 kcal/100g of pure fat barriers. Particularly advantageous are compositions containing 25% to 50%, even more advantageously are compositions containing 25% to 45% of suitable total fat, and most advantageously are compositions containing 25% to 35% of suitable total fat.

### e) Sugar/polyol

Suitable sugars or polyols within the sense of this invention are those which form saturated solutions with a water activity equal or greater than that of saturated sucrose solution (0.84). Preferred are sugars or polyols forming saturated solutions in water with an aw of 0.89 or greater. More preferred are sugars or polyols forming saturated solutions in water with an aw of 0.94 or greater. Examples of sugars or polyols forming saturated solutions with aw equal or greater than 0.84 are sucrose, dextrose, maltose, trehalose, lactose, galactose, maltitol, lactitol, and erythritol. Examples of sugars or polyols forming saturated solutions with aw equal or greater than 0.89 are dextrose, maltose, trehalose, lactose, galactose, maltitol, lactitol, erythritol. Examples of sugars or polyols forming saturated solutions with aw equal or greater than 0.94 are maltose, trehalose, lactose, galactose, and erythritol. Examples of sugars or polyols forming saturated solutions with a water activity of less than 0.84 and, therefore, being not suitable within the sense of this invention are fructose, xylitol, and sorbitol. Some of the suitable sugars can be crystallized in anhydrous or hydrated crystal modifications. Hydrates are preferred over anhydrous crystal forms. For example, alpha-lactose monohydrate is preferred over anhydrous alpha- or beta-lactose, dextrose mono-hydrate is preferred over anhydrous dextrose, maltose mono-hydrate is preferred over anhydrous maltose, lactitol mono-hydrate is preferred over anhydrous lactitol, and trehalose di-hydrate is preferred over anhydrous trehalose. All commercially available sugar or polyol ingredients contain only negligible amounts of minerals (< 0.1% ash content) which have no impact on their performance in a moisture barrier application.

Lactose within the sense of this is invention describes a material consisting of at least 97% lactose mono-hydrate, more preferably at least 99%.

As aforementioned, sucrose can be used as well, although using one or more of the aforementioned alternative sugars/polyols leads to significantly more functional compositions while the sensory profile is not significantly altered. In order to reduce the calorie content of the food product it is favourable to use polyols rather than sugars. For example, maltitol and lactitol have a calorie content of 240 kcal/100g, erythritol has a calorie content of 20 kcal/100g as compared to sugars which have a calorie content of 400 kcal/100g. The sugar or sugar blend will ultimately be selected as an optimum combination providing barrier functionality, sweetness and calorie content desired in the respective application.

Compositions according to the present invention contain between 0% and 60% of suitable sugar / polyol. Particularly advantageous are compositions containing 20% to 60% and even more advantageous are compositions containing 25% to 60% of suitable sugar / polyol.

The composition according to the present invention preferably has an ash content of 1 % by weight or less, more preferably 0.8 % by weight or less and most preferably 0.6 % by weight or less. The ash content of the entire composition is determined in the same manner as described above with respect to the dairy ingredient.

### Food components having a high water activity

Examples of the food components having a high water activity include but are not limited to fruit, fruit preparations, fruit spread, confitures, vegetable spreads or preparations, fresh cheese, yoghurt or other dairy-based desserts, puddings, and ice cream.

The water activity of these compounds is 0.80 or higher, preferably 0.85 and higher, more preferably 0.90 and higher and may be up to 0.99.

### Food components having a low water activity

Examples of the food components having a low water activity include but are not limited to dried fruits, biscuit preparations, cereal preparations, wafers and the like, chocolates and other fat based confections, caramel, toffee and the like, and sugar based confections.

The water activity of these compounds is lower than 0.80, preferably 0.70 or lower, more preferably 0.60 or lower, still more preferably 0.55 or lower, most preferably 0.50 or lower.

### Determination of Water Activity (a$_w$)

The water activity (aw) is defined as the percent equilibrium relative humidity (% ERH) divided by 100. It can also be defined as the ratio of the equilibrium water vapor pressure over a food (p) to that over pure water (p0):

$$a_w = p/p_0$$

Multiplication of the water activity by 100 gives the relative humidity of the atmosphere in equilibrium with the food:

$$ERH(\%) = 100 \times a_w$$

In practice, the water activity is a measure of "free" water in a food sample as opposed to "bound" water.

The water activity ($a_w$ value) is determined at 25 °C using the instrument AquaLab Model XC-2 and following the manufacturer's instructions for the instrument. The linear offset of the instrument is verified against known salt standards, one of which displaying an $a_w$ above that of the sample and the other one displaying an $a_w$ below that of the sample. The determined value for the $a_w$ of distilled water is set to 1.000 ± 0.003. The measurement of the $a_w$ value of the sample is repeated until two successive values differ by less than 0.003. The $a_w$ value assigned to the sample is the average of those two values.

The composition according to the present invention can be applied as shell, inclusion, or barrier layer in food products such as confections. It is suitable for use in direct contact with food components having an very high aw, such as 0.99.

## Examples

The following examples are disclosed as practical embodiments of the invention, but it is by no means intended that the invention is perceived as limited to these examples.

Comparative examples are marked **§**.

General procedures

The following procedures are generally applied unless indicated otherwise.

The viscosity of mixtures was measured at 40°C and a shear rate of 2/s. Viscosimeters Haake VT550 equipped with a concentric cylinder probe SV1 were used.

After conching and viscosity measurement, the liquid composition was then tempered and moulded in rectangular tablets (38 x 23 x 6 mm). 3 replicate tablets each were placed in a desiccator over a 17 % by weight aqueous NaCl solution (corresponding to a relative humidity of 89 %) or over a 8.5 % by weight aqueous NaCl solution (corresponding to a relative humidity of 95 %). The desiccator was placed in a 10 °C storage cabinet for up to 40 days. Moisture uptake of samples was measured as the weight increase relative to the initial weight and is reported as average of 3 replicate samples.

## 1. Impact of sugars and polyols / Moisture uptake of composition tablets

White compositions were manufactured by mixing ingredients according to Table 4a and refining the mixture in 2 passages through a pilot scale 3-roll-refiner (Buehler, Uzwil, Switzerland) to obtain a particle size ($D_{90}$ by laser diffraction, measured by Malvern Mastersizer) of approximately 30 $\mu$m. The resulting refined mixture is referred to as refiner flakes. According to Table 4b a weighted part of the refiner flakes was blended with further cocoa butter in a pilot scale conche (samples P800 and V200: 60kg conche manufactured by Richard Frisse GmbH, Bad Salzuflen Germany; sample P300: Aoustin pilot scale conche Type MX6I; RPA Process Technologies S.A.S., Nanterre, France) at 50C (jacket temperature) for 4 hours until a homogeneous mixture was achieved.

Table 4a:

|  | P800 [g] | P300 [g] | V200 [g] |
|---|---|---|---|
| Cocoa butter | 6709 | 893 | 8580 |
| Demineralised skim milk powder [1)] | 6764 | 901 | 4810 |
| Sucrose | 5974 |  |  |
| Trehalose-dihydrate |  | 1800 |  |

(continued)

|  | P800 [g] | P300 [g] | V200 [g] |
|---|---|---|---|
| Lactose-monohydrate | 7553 |  | 9610 |
| 1) experimental demineralised skim milk powder, protein content approx. 28%, 2.5% ash, 3000 mg/kg monovalent ions | | | |

Table 4b:

|  | P800 [g] | P300 [g] | V200 [g] |
|---|---|---|---|
| Refiner flakes | 23952 | 3593 | 21931 |
| Cocoa butter | 6048 | 1807 | 5569 |
| Total weight | 30000 | 5400 | 27500 |
| Relative moisture uptake (28 d, 95 % RH) | 3.50 % | 0.38 % | 0.28 % |

Recipes P300 and V200 have in common a 33.3% dosage of a preferred sugar in the final blend whereas the sample P800 contains 17.7% of a non-preferred sugar.

After 28 days of storage at 95 % RH, sample P800 had a moisture up-take of 3.5% which is substantially higher than in samples P300 and V200 and can be attributed to the presence of the non-preferred sugar sucrose.

**Example 2: Moisture up-take of composition tablet using preferred sugar, demineralised dairy ingredient, and preferred emulsifier.**

White compounds were manufactured by mixing ingredients according to Table 5a. The mixture was refined in 2 passages through a pilot scale 3-roll-refiner (Buehler, Uzwil, Switzerland) to obtain a particle size ($D_{90}$ by laser diffraction, measured by Malvern Mastersizer) of approximately 30 $\mu$m. The resulting refined mixture is referred to as refiner flakes. According to Table 5b a weighted part of the refiner flakes was blended with further ingredients in a Aoustin pilot scale conche (Type MX6I; RPA Process Technologies S.A.S., Nanterre, France) at 50°C (jacket temperature) for 4 hours until a homogeneous mixture was achieved.

Both formulations have:

- a total fat content of 40%
- a milk fat content of 8%,
- a emulsifier dosage of 0.5 %
- a combined sugar and dairy ingredient dosage of 60% in the final blend.

Table 5a

|  | R37[§] [g] | R02 [g] |
|---|---|---|
| Cocoa butter | 659.8 | 1443.3 |
| Anhydrous milk fat | 392.96 | 494.7 |
| Sucrose | 1473.6 |  |
| maltose mono-hydrate |  | 2505.9 |
| skim milk powder[1] | 1473.6 |  |
| demineralised skim milk powder[2] |  | 1251.0 |
| [1] conventional skim milk powder: approx. 37% protein, 7.5% ash, 32000 mg/kg monovalent ions [2] experimental demineralised skim milk powder approx. 28% protein, 2.5% ash, 3000 mg/kg monovalent ions | | |

Table 5b

|  | R37[§] [g] | R02 [g] |
|---|---|---|
| Refiner flakes | 3257.3 | 4411.1 |
| Cocoa butter | 722.7 | 414.7 |
| Soy lecithin [1] | 22.0 | |
| Citric acid ester [2] | | 24.2 |
| Total weight | 4000.0 | 4850.0 |
| Relative moisture uptake (28 d, 95 % RH) | 10.8 % | 0.55 % |
| Viscosity at 40°C, 2/s [Pa · s] | 3.2 | 4.3 |
| 1) non-standardized soy lecithin 2) citric acid ester Palsgaard 4201, Palsgaard, Juelsminde, Denmark | | |

After storage at 95 % RH, sample R02 showed largely reduced moisture up-take as compared to comparative sample R37. These data demonstrate the potential to reduce moisture up-take and thus improve moisture barrier properties by selecting a demineralised dairy ingredient and a preferred sugar and emulsifier.

**3. Impact of Emulsifier**

A white composition was manufactured by mixing ingredients according to Table 6a and refining the mixture in 2 passages through a pilot scale 3-roll-refiner (Buehler, Uzwil, Switzerland) to obtain a particle size ($D_{90}$ by laser diffraction, measured by Malvern Mastersizer) of approximately 30 $\mu$m. The resulting refined mixture is referred to as refiner flakes. According to Table 6b a weighted part of the refiner flakes was blended with further ingredients in a Aoustin pilot scale conche (Type MX6I; RPA Process Technologies S.A.S., Nanterre, France) at 50°C (jacket temperature) for 4 hours until a homogeneous mixture was achieved.

All formulations have:

- a total fat content of 40 %
- a milk fat content of 8 %,
- a skim milk powder dosage of 30 %, and
- a sucrose dosage of 30 %
- an emulsifier dosage of 0.5% (A100, A120, A130) or 1.0% (A140), respectively,

in the final blend.

Table 6a:

|  | A100[§] [g] | A120 [g] | A130 [g] | A140 [g] |
|---|---|---|---|---|
| Cocoa butter | 1036.6 | 648.0 | 648.0 | 648.0 |
| Anhydrous milk fat | 725.1 | 453.2 | 453.2 | 453.2 |
| Skim milk powder | 2719.1 | 1699.5 | 1699.5 | 1699.4 |
| Sucrose | 2719.1 | 1699.5 | 1699.5 | 1699.4 |

Table 6b:

|  | A100[§] [g] | A120 [g] | A130 [g] | A140 [g] |
|---|---|---|---|---|
| Refiner flakes | 3574.6 | 3574.6 | 3574.6 | 3574.6 |
| Cocoa butter | 902.8 | 902.8 | 902.8 | 880.2 |
| Soy lecithin[1] | 22.5 | | | |

(continued)

| | A100§) [g] | A120 [g] | A130 [g] | A140 [g] |
|---|---|---|---|---|
| CAE[2] | | 22.5 | | 22.5 |
| PGPR[3] | | | 22.5 | 22.5 |
| Total weight | 4499.9 | 4499.9 | 4499.9 | 4499.9 |
| Relative moisture uptake (40 d, 89 % RH) | 4.33 % | 1.65 % | 2.27 % | 2.68 % |
| Viscosity at 40°C, 2/s [Pa · s] | 2.1 | 2.1 | 1.0 | 1.0 |
| 1) non-standardized soy lecithin 2) citric acid ester Palsgaard 4201, Palsgaard, Juelsminde, Denmark 3) Polyglycerol Polyricinoleate Palsgaard 4150, Palsgaard, Juelsminde, Denmark | | | | |

The data show that a white composition with same viscosity but with approximately 60 % reduced water uptake is obtained when CAE (A120) is used instead of lecithin (A100). Viscosity can be substantially further reduced when PGPR is used (A130) or combinations of CAE and PGPR (A140) while water uptake is still substantially lower (approx. 40 % A140 resp. approx. 50 % A130) compared to the comparative sample with lecithin (A100).

After 40 days of storage at 89 % RH, it was noted that some cracking/delamination had developed with the comparative sample A100 and moisture had penetrated into the composition bar leading to a substantial outer layer showing discoloration. Cracking/delamination was not observed with any of the other samples and the layer in which discoloration occurred was significantly thinner.

The example demonstrates that it is favourable to formulate moisture barrier compositions with non-ionic emulsifiers as compared to ionic emulsifiers.

**Example 4: Impact of demineralization of cocoa ingredient**

**4.1. Preparation of demineralized cocoa powder by membrane filtration**

Non-alkalized cocoa powder (Kraft Foods, Bludenz, Austria; composition by weight: 11 % fat, 6 % ash, 32 % fiber, 28.1 % protein; particle size D90 = 17 $\mu$m) was suspended in ultrapure water at concentrations up to a maximum of 10 % by weight cocoa powder at a temperature of 20 °C. The powder was suspended in the water mixing agitation such as shaking, stirring, ultra sound, and recirculation at high pump speeds. This suspension was recirculated in crossflow over an hydrophilie cellulose membrane (Schleicher & Schuell RC 55/58) with pore sizes between 0.1 and 0.5 $\mu$m. The permeate (dry yield ca. 10-20%) was a crystal clear solution, containing the water soluble constituents of cocoa powder. The retentate was a suspension of cocoa powder in water. After separate removal of the water by e.g. (vacuum) evaporation or freeze drying from both the retentate and the permeate, the retentate was obtained in a dry yield of ca. 80-90%.

Thus, two cocoa powders were obtained, having a very different flavor profile and composition (table 7). The analytical results show a reduction of approximately 30% of total ash content and reduction of 45% reduction of potassium in the dried retentate which, therefore, can be considered a partially demineralized cocoa powder.

Table 7:

| | Original Cocoa Powder [g/100 g] | dried retentate [g/100 g] | Dried filtrate [g/100 g] |
|---|---|---|---|
| Fat total | 11.20 | 14.68 | 3.82 |
| Protein total | 28.10 | 28.59 | 28.92 |
| Carbohydrates | 21.93 | 7.71 | 21.43 |
| Sugars | 0.50 | 0.00 | 1.97 |
| Fibre | 32.70 | 35.43 | 18.73 |
| Purines total | 3.12 | 2.69 | 4.29 |
| Ash | 6.07 | 4.19 | 18.40 |
| Calcium | 0.17 | 0.21 | 0.12 |

(continued)

|  | Original Cocoa Powder [g/100 g] | dried retentate [g/100 g] | Dried filtrate [g/100 g] |
|---|---|---|---|
| Potassium | 2.08 | 1.22 | 6.29 |
| Reduction of Potassium content | 0% | 41% | not applicable |

The potassium content was analyzed as explained in relation to the dairy ingredient a) and the reduction of potassium content in the retentate was calculated versus the original powder according to following equation:

```
Reduction = 100% * (1 - (retentate-K / original-K))
```

wherein retentate-K means the potassium content of the retentate and original-K means the potassium content in the original powder.

**4.2. Impact of modified Cocoa powder on moisture uptake of a milk compound**

Milk compounds were manufactured by mixing ingredients according to Table 8a and refining the mixture in 2 passages through a pilot scale 3-roll-refiner (Buehler, Uzwil, Switzerland) to obtain a particle size ($D_{90}$ by laser diffraction, measured by Malvern Mastersizer) of approximately 30 $\mu$m to 35 $\mu$m. The resulting refined mixture is referred to as refiner flakes. According to Table 8b a weighted part of the refiner flakes was blended with further ingredients in a Aoustin pilot scale conche (Type MX6I; RPA Process Technologies S.A.S., Nanterre, France) at 50°C (jacket temperature) for 2.5 hours until a homogeneous mixture was achieved. The resulting compounds both contain about 9 % of cocoa solids non-fat.

The liquid compound was tempered and molded in rectangular tablets (38mm x 23 mm x 6 mm) . There was only a marginal difference in color appearance (see Table 8b). The sample with conventional cocoa powder exhibited a strong 'dark cocoa flavour' while the sample with demineralized cocoa powder was less intense in flavor overall and particularly with respect to bitterness.

The tablets were stored for one day at 16°C, sealed in plastic bags. 5 replicate tablets each were then placed in desiccators over an aqueous solution containing 8.5 % by weight of NaCl (corresponding to a relative humidity of 95 %) . The desiccators were placed in a 10 °C storage cabinet. Average moisture up-take of the 5 replicates after 21 days storage shown in Table 8b demonstrate approx. 40% (at 95% RH) reduction of moisture up-take with the demineralized cocoa powder (050 300 AO) compared to the conventional cocoa powder (050 200 AO).

Table 8a

|  | 050 200[§] [g] | 050 300 [g] |
|---|---|---|
| Cocoa butter | 668 | 655 |
| Cocoa butter, conventional defatted[1] | 329 | |
| Cocoa powder demineralised[2] | | 331 |
| Anhydrous milk fat | 121 | 122 |
| Partly demineralised skim milk powder[3] | 869 | 874 |
| Maltose mono-hydrate | 860 | 865 |
| 1) original cocoa power as in example 5.1<br>2) dried retentate from example 5.1<br>3) experimental demineralised skim milk powder approx. 32% protein, 4.8% ash, 19200 mg/kg monovalent ions | | |

Table 8b

| Refiner flakes | 2568 | 2665 |
|---|---|---|
| Cocoa butter | 386 | 418 |

(continued)

| Lecithin | 15 | 16 |
|---|---|---|
| Colour L | 29.0 | 29.7 |
| Colour a | 6.3 | 6.6 |
| Colour b | 4.1 | 4.9 |
| Relative moisture uptake, 21 d, 95 % RH | 5.0 % | 3.0 |

**Example 5: Barrier properties of compounds when used between a wafer and an aqueous milk mousse filling**

White compounds MCS, MCTL were manufactured according to Table 9 and used as a barrier on a wafer cone filled with an aqueous filling. The calculated ash content (incl. tri-calcium-phosphate) in the compounds is 4.4% in MCS and 2.3% in MCTL.

The Danisco Barrier System 2000 (DBS) which is designed as a pure specialty fat moisture barrier was also used for comparison.

Ingredients according to Table 9 were blended in a Stephan cooker. The mix was then refined in 2 passages through a pilot scale 3-roll-refiner (Buehler, Uzwil, CH) and the refined blend transferred back to the Stephan cooker where additional ingredients according to Table 9 were added (marked [#]). For sample DBS, the ingredient was used as received from Danisco.

Approximately 8 g of the liquid masses were evenly distributed on the inner side of a wafer cone (9 g weight; initial water activity 0.35) at a temperature of 30 to 40°C. After cooling to crystallize the barrier layer, the cones were filled with approximately 15 g of a milk based mousse having a water activity of 0.93. The top of the cone was then covered with approximately 4 g of the barrier layer, cooled, individually sealed in plastic bags and stored at 4°C.

Samples were evaluated after various storage times by a group of experts focusing on crunchiness of both the wafer and the topping layer using a 5-point scale (5 pts = excellent, 3.5 pts = border line acceptable and 1 pts = totally unacceptable).

From the beginning, sample DBS rapidly lost quality and was unacceptable after a storage time of more than 40 days. Sample MCS maintained good quality (> 4.5 pts) up to approx. 35 days, then rapidly lost quality, and was also found unacceptable after a storage time of more than 40 days. This comparison demonstrates that a heterogeneous compound is superior to a pure fat barrier in this application, however a compound using conventional skim milk powder is not suitable if a shelf-life greater than 40 days is required.

In contrast to comparative sample MCS sample MCTL exhibited excellent quality (5 pts) even after a storage time of more than 80 days. It was also observed that the milk filling maintained its quality (soft, moist texture) very well in the MCTL sample, whereas it changed significantly (loosing volume and developing dry, chewy texture) after a storage time of more than 40 days in the MCS and DBS samples.

This example clearly demonstrates superior performance of a heterogeneous moisture barrier using a demineralised dairy ingredient and a preferred sugar according to the present invention.

Table 9:

|  | MCS[§] [g] | MCTL [g] | DBS[§] [g] |
|---|---|---|---|
| Sucrose | 770 (15.4 %) |  |  |
| α-lactose monohydrate |  | 770 (15.4 %) |  |
| 93:7 blend of conventional skim milk powder and conventional sweet whey powder[1] | 2150 (43.0 %) |  |  |
| demineralised skim milk powder[2] |  | 2150 (43.0 %) |  |
| cocoa butter substitute | 1000 (20.0 %) | 1000 (20.0 %) |  |
| Danisco Barrier System 2000 |  |  | 1000 (100.0 %) |
| Tri-calcium phosphate | 50 (1.0 %) | 50 (1.0 %) |  |
| Cocoa butter substitute[#] | 1000 (20.0 %) | 1000 (20.0 %) |  |
| Soy lecithin[3][#] | 20 (0.4 %) | 20 (0.4 %) |  |

(continued)

|  | MCS[§] [g] | MCTL [g] | DBS[§] [g] |
|---|---|---|---|
| PGPR[4)#)] | 10 (0.2 %) | 10 (0.2 %) | |
| Total weight | 5000 (100.0 %) | 5000 (100.0 %) | 1000 (100.0 %) |

1) conventional skim milk powder approx. 35% protein, 7.9% ash, 33000 mg/kg monovalent ions
2) experimental demineralised skim milk powder approx. 28% protein, 2.5% ash, 3000 mg/kg monovalent ions
3) non-standardized soy lecithin
4) polyglycerol polyricinoleate (Grindsted PGPR90, Danisco, Brabrand, Denmark)
#) added after refining

## Claims

1. Edible composition for use as moisture barrier or moisture resistant structure comprising, based on the total weight of the composition,

    a) 5 to 50 % by weight of a dairy ingredient having a low mineral content in terms of an ash content of 5.5 % by weight or less, preferably 3.5 % by weight or less, more preferably 2.8 % by weight or less, most preferred 1.8 % by weight or less,
    b) 0 to 25 % by weight of a cocoa component having a low mineral content in terms of an ash content of 4.5 % by weight or less, preferably 3.5 % by weight or less, more preferably 2.5 % by weight or less,
    c) 0 to 2 % by weight of an emulsifier selected from the list consisting of acetic acid esters of mono and diglycerides of fatty acids, lactic acid esters of mono and diglycerides of fatty acids, citric acid esters of mono and diglycerides of fatty acids, and polyglycerol polyricinoleate,
    d) a fatty component,
    e) 0 to 60 % by weight of at least one sugar and/or polyol of which the saturated solution has a water activity of at least 0.84, preferably at least 0.89, more preferably 0.94;

    wherein
    the total fat content of the composition is from 25 to 60 % by weight.

2. Composition according to claim 1, wherein the total fat content of the composition is from 25 to 50 % by weight, preferably 25 to 40 % by weight, more preferably 25 to 35 % by weight.

3. Composition according to any one of the preceding claims, wherein component e) is selected from the list consisting of sucrose, dextrose, maltose, trehalose, lactose, galactose, maltitol, lactitol and erythritol and hydrates thereof.

4. Composition according to claim 3, wherein component e) is selected from the list consisting of lactose monohydrate, dextrose monohydrate, maltose monohydrate, lactitol monohydrate and trehalose dihydrate.

5. Composition according to any one of the preceding claims, wherein component e) is present in an amount of from 20 to 60 % by weight.

6. Composition according to any one of the preceding claims, wherein component c) is present in an amount of from 0 to 1.2 % by weight.

7. Composition according to any one of the preceding claims, wherein component a) is present in an amount of from 25 to 50 % by weight.

8. Composition according to any one of the preceding claims having a calorie content of less than 560 kcal/100 g, preferably less than 490 kcal/100 g.

9. Composition according to any one of the preceding claims, wherein the ash content of the entire composition is 1 % by weight or less.

10. Food product comprising the composition of any one of claims 1 to 9, comprising at least one component A) having a water activity of 0.80 or more and at least one component B)having a water activity of less than 0.80, wherein the water activity is measured at 25°C.

11. Food product according to claim 10, wherein said at least one component A) and said at least one component B) are in contact with and separated by the composition according to any of claims 1 to 8.

12. Food product according to claim 11, wherein the composition according to any of claims 1 to 9 is present in the form of a layer having thickness of 0.5 to 4 mm.


**Patentansprüche**

1. Essbare Zusammensetzung zur Verwendung als Feuchtigkeitssperre oder feuchtigkeitsbeständige Struktur, umfassend, basierend auf dem Gesamtgewicht der Zusammensetzung,

   a) zu 5 bis 50 Gew.-% einen Milchinhaltsstoff mit einem niedrigen Mineralgehalt in Bezug auf einen Aschegehalt von 5,5 Gew.-% oder weniger, vorzugsweise 3,5 Gew.-% oder weniger, mehr bevorzugt 2,8 Gew.-% oder weniger, am meisten bevorzugt 1,8 Gew.-% oder weniger,
   b) zu 0 bis 25 Gew.-% einen Kakaobestandteil mit einem niedrigen Mineralgehalt in Bezug auf einen Aschegehalt von 4,5 Gew.-% oder weniger, vorzugsweise 3,5 Gew.-% oder weniger, mehr bevorzugt 2,5 Gew.-% oder weniger,
   c) zu 0 bis 2 Gew.-% einen Emulgator, ausgewählt aus der Liste bestehend aus Essigsäureestern von Mono- und Diglyceriden von Fettsäuren, Milchsäureestern von Mono- und Diglyceriden von Fettsäuren, Citronensäureestern von Mono- und Diglyceriden von Fettsäuren und Polyglycerinpolyricinoleat,
   d) einen Fettbestandteil,
   e) zu 0 bis 60 Gew.-% mindestens einen Zucker und/oder ein Polyol, dessen gesättigte Lösung eine Wasseraktivität von mindestens 0,84, vorzugsweise mindestens 0,89, mehr bevorzugt 0,94 aufweist;

   wobei
   der Gesamtfettgehalt der Zusammensetzung von 25 bis 60 Gew.-% beträgt.

2. Zusammensetzung nach Anspruch 1, wobei der Gesamtfettgehalt der Zusammensetzung von 25 bis 50 Gew.-%, vorzugsweise 25 bis 40 Gew.-%, mehr bevorzugt 25 bis 35 Gew.-% beträgt.

3. Zusammensetzung nach einem der vorstehenden Ansprüche, wobei
   Bestandteil e) ausgewählt ist aus der Liste bestehend aus Saccharose, Dextrose, Maltose, Trehalose, Lactose, Galactose, Maltitol, Lactitol und Erythritol und Hydraten davon.

4. Zusammensetzung nach Anspruch 3, wobei
   Bestandteil e) ausgewählt ist aus der Liste bestehend aus Lactosemonohydrat, Dextrosemonohydrat, Maltosemonohydrat, Lactitolmonohydrat und Trehalosedihydrat.

5. Zusammensetzung nach einem der vorstehenden Ansprüche, wobei
   Bestandteil e) in einer Menge von 20 bis 60 Gew.-% vorhanden ist.

6. Zusammensetzung nach einem der vorstehenden Ansprüche, wobei Bestandteil c) mit einem Anteil von 0 bis 1,2 Gew.-% vorhanden ist.

7. Zusammensetzung nach einem der vorstehenden Ansprüche, wobei Bestandteil a) mit einem Anteil von 25 bis 50 Gew.-% vorhanden ist.

8. Zusammensetzung nach einem der vorstehenden Ansprüche mit einem Kaloriengehalt von weniger als 560 kcal/100 g, vorzugsweise weniger als 490 kcal/100 g.

**9.** Zusammensetzung nach einem der vorstehenden Ansprüche, wobei der Aschegehalt der gesamten Zusammensetzung 1 Gew.-% oder weniger beträgt.

**10.** Lebensmittelprodukt nach einem der Ansprüche 1 bis 9, das mindestens einen Bestandteil A) mit einer Wasseraktivität von 0,80 oder mehr und mindestens einen Bestandteil B) mit einer Wasseraktivität von weniger als 0,80 enthält, wobei die Wasseraktivität bei 25 °C gemessen wird.

**11.** Lebensmittelprodukt nach Anspruch 10, wobei der mindestens eine Bestandteil A) und der mindestens eine Bestandteil B) mit der Zusammensetzung nach einem der Ansprüche 1 bis 8 in Kontakt und dadurch getrennt sind.

**12.** Lebensmittelprodukt nach Anspruch 11, wobei die Zusammensetzung nach einem der Ansprüche 1 bis 9 in Form einer Schicht mit einer Dicke von 0,5 bis 4 mm vorhanden ist.

**Revendications**

**1.** Composition comestible à utiliser comme une barrière contre l'humidité ou une structure résistant à l'humidité comprenant, en fonction du poids total de la composition,

a) 5 à 50 % en poids d'un ingrédient laitier ayant une faible teneur en minéraux en termes d'une teneur en cendres de 5,5 % en poids ou moins, de préférence 3,5 % en poids ou moins, plus préférablement 2,8 % en poids ou moins, le plus préférablement 1,8 % en poids ou moins,
b) 0 à 25 % en poids d'une composante de cacao ayant une faible teneur en minéraux en termes d'une teneur en cendres de 4,5 % en poids ou moins, de préférence 3,5 % en poids ou moins, plus préférablement 2,5 % en poids ou moins,
c) 0 à 2 % en poids d'un émulsifiant choisi dans la liste constituée d'esters d'acide acétique de mono et diglycérides d'acides gras, d'esters d'acide lactique de mono et diglycérides d'acides gras, d'esters d'acide citrique de mono et diglycérides d'acides gras et de polyricinoléate de polyglycérol,
d) une composante grasse,
e) 0 à 60 % en poids d'au moins un sucre et/ou polyol dont la solution saturée a une activité aqueuse d'au moins 0,84, de préférence au moins 0,89, plus préférablement 0,94 ;

dans lequel
la teneur totale en gras de la composition est de 25 à 60 % en poids.

**2.** Composition selon la revendication 1, dans laquelle la teneur totale en
gras de la composition est de 25 à 50 % en poids, de préférence 25 à 40 % en poids, plus préférablement 25 à 35 % en poids.

**3.** Composition selon l'une quelconque des revendications précédentes,
dans laquelle
la composante e) est choisie dans la liste constituée du saccharose, dextrose, maltose, tréhalose, lactose, galactose, maltitol, lactitol et érythritol et des hydrates de ceux-ci.

**4.** Composition selon la revendication 3, dans laquelle
la composante e) est choisie dans la liste constituée de monohydrate de lactose, monohydrate de dextrose, monohydrate de maltose, monohydrate de lactitol et dihydrate de tréhalose.

**5.** Composition selon l'une quelconque des revendications précédentes,
dans laquelle
la composante e) est présente en une quantité de 20 à 60 % en poids.

**6.** Composition selon l'une quelconque des revendications précédentes, dans laquelle la composante c) est présente en une quantité de 0 à 1,2 % en poids.

**7.** Composition selon l'une quelconque des revendications précédentes, dans
laquelle la composante a) est présente en une quantité de 25 à 50 % en poids.

**8.** Composition selon l'une quelconque des revendications précédentes,
ayant une teneur en calories inférieure à 560 kcal/100 g, de préférence inférieure à 490 kcal/100 g.

**9.** Composition selon l'une quelconque des revendications précédentes,
dans laquelle la teneur en cendres de l'ensemble de la composition est de 1 % en poids ou moins.

**10.** Produit alimentaire comprenant la composition de l'une quelconque des revendications 1 à 9, comprenant au moins une composante A) ayant une activité aqueuse de 0,80 ou plus et au moins une composante B) ayant une activité aqueuse inférieure à 0,80, dans lequel l'activité aqueuse est déterminée à 25 °C.

**11.** Produit alimentaire selon la revendication 10, dans laquelle ladite au moins une composante A) et ladite au moins une composante B) sont en contact avec la composition et séparées par celle-ci selon l'une quelconque des revendications 1 à 8.

**12.** Produit alimentaire selon la revendication 11, dans laquelle la composition selon l'une quelconque des revendications 1 à 9 est présente sous la forme d'une couche ayant une épaisseur de 0,5 à 4 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9715198 A
- US 20040241287 A1
- US 5741505 A
- US 6733805 B
- US 6790466 B
- WO 0016636 A
- WO 0070959 A
- WO 9740700 A
- US 2007087085 A

- EP 0023151 A
- WO 9605735 A
- GB 2131669 A
- WO 03068001 A
- WO 9842214 A
- EP 0908650 A1
- US 6488975 B
- EP 1346640 A

**Non-patent literature cited in the description**

- **RAVICHANDRAN et al.** *Confectionery Production,* November 1997, 33-34

- **SOUCI, S. ; FACHMANN, W. ; KRAUT, H.** Die Zusammensetzung der Lebensmittel - Naehrwert Tabellen. Wiss. Verlagsges, 1986